Europäisches Patentamt

European Patent Office

Office européen des brevets

(19)

(11) **EP 1 111 815 A1**

(12) **EUROPEAN PATENT APPLICATION**
published in accordance with Art. 158(3) EPC

(43) Date of publication:
27.06.2001 Bulletin 2001/26

(51) Int Cl.⁷: **H04B 7/26**

(21) Application number: 00942380.7

(86) International application number:
**PCT/JP00/04270**

(22) Date of filing: 29.06.2000

(87) International publication number:
**WO 01/03334 (11.01.2001 Gazette 2001/02)**

(84) Designated Contracting States:
**AT BE CH CY DE DK ES FI FR GB GR IE IT LI LU MC NL PT**
Designated Extension States:
**AL LT LV MK RO SI**

(30) Priority: **01.07.1999 JP 18761099**

(71) Applicant: **Matsushita Electric Industrial Co., Ltd.**
**Kadoma-shi, Osaka-fu, 571-8501 (JP)**

(72) Inventors:
• **KITAGAWA, Keiichi**
**Yokosuka-shi, Kanagawa 239-0847 (JP)**

• **UESUGI, Mitsuru**
**Yokosuka-shi, Kanagawa 238-0048 (JP)**
• **MIYA, Kazuyuki**
**Kawasaki-shi, Kanagawa 215-0021 (JP)**
• **KASAPIDIS, Makis**
**Thatcham, Berkshire RG18 3DL (GB)**

(74) Representative: **Leeming, John Gerard**
**J.A. Kemp & Co.,**
**14 South Square,**
**Gray's Inn**
**London WC1R 5LX (GB)**

(54) **METHOD OF CONTROLLING TRANSMISSION POWER AND APPARATUS FOR TRANSMISSION AND RECEPTION**

(57)   In received quality detection section 108, SIR measuring section 201 measures SIR of a despread signal, averaging section 202 calculates an average value of measured SIR over predetermined N slots, subtraction section 203 subtracts reference SIR stored in storage section 204 from the average SIR, and positive-negative determination section 205 determines whether a subtracted result is positive or negative to provide to TPC bit generation section. Thereby TPC bit generation section 109 judges whether to transmit 0 or 1, i.e., an instruction indicative of increasing transmit power or another instruction indicative of decreasing the transmit power to generate a TPC bit.

FIG. 4

## Description

Technical Field

The present invention relates to a transmit power control method and transmission/reception apparatus in a mobile communication using a CDMA system.

Background Art

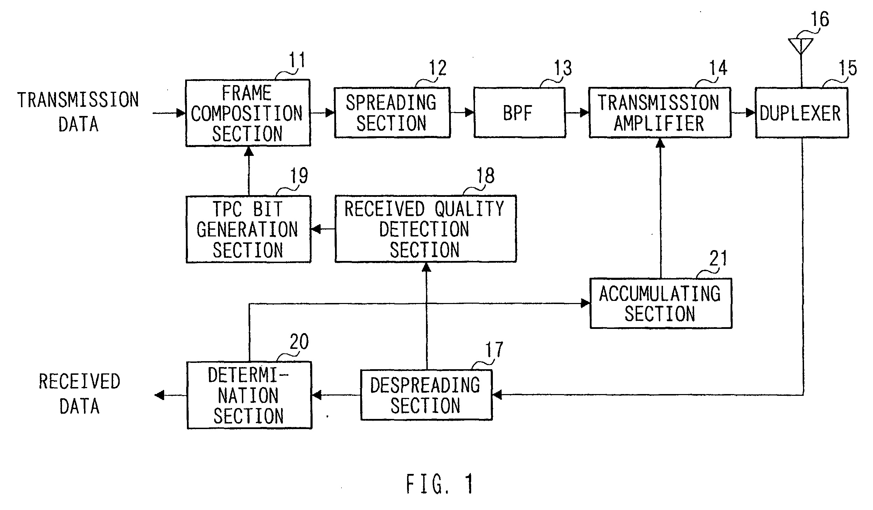

A conventional transmit power control method and transmission/reception apparatus in a mobile communication will be explained using FIG.1. FIG.1 is a block diagram illustrating a partial schematic configuration of the conventional transmission/reception apparatus.

Frame composition section 11 multiplexes transmission data and TPC bit. Spreading section 12 spreads and modulates the multiplexed data, and BPF 13 cancels unnecessary signals from the spread signal. Transmission amplifier 14 amplifies a transmission signal from which the unnecessary signals are canceled, duplexer 15 controls signals input or output to antenna 16, and antenna 16 radiates the amplified transmission signal.

Antenna 16 also receives signals, and despreading section 17 demodulates the received signals. At this point, received quality detection section 18 calculates a signal interference ratio (hereinafter referred to as "SIR") from the result despread in despreading section 17 to detect a received quality.

TPC bit generation section 19 receives the detected result from received quality detection section 18, and generates a TPC bit for notifying a partner station to increase transmit power when the received quality is less than a desired quality, or to decrease the transmit power in order to reduce interference with other users when the received quality is more than the desired quality. For example, TPC bit generation section 19 sets the TPC bit to 1 when the received quality is less than the desired quality, while setting the TPC bit to 0 when the received quality is more than the desired quality. The generated TPC bit is output to frame composition section 11, and multiplexed on transmission data.

Determination section 20 obtains received data from the demodulated received signal. Further, determination section 20 extracts the TPC bit transmitted from a partner station from the demodulated received data, and determines whether the TPC bit is 0 or 1. Accumulating section 21 receives the determined result from determination section 20, and corresponding to the result, instructs transmission amplifier 14 to increase or decrease the transmit power. For example, it is predetermined that a current amplification amount is decreased by 1dB when the determined result is indicative of 0, while the current amplification amount is increased by 1dB when the determined result is indicative of 1.

In such a conventional transmit power control method, a base station and a mobile station both perform the transmit power control based on the TPC bits in received signals, and thereby suitable transmit power is maintained.

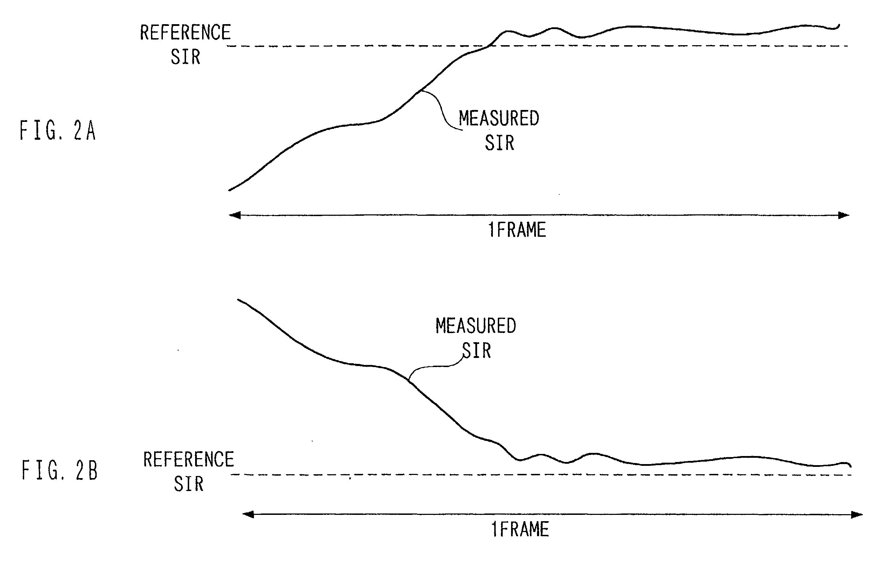

However, in the conventional transmit power control method, there are following problems due to a rapid variation in channel condition, transmit power control error, TPC command error, etc. FIGs.2A and 2B are graphs showing a variation in SIR to explain a following condition of transmit power control in the conventional transmit power control method and transmission/reception apparatus.

That is, as illustrated in FIG.2A, when at a beginning portion of a frame, the transmission is performed with the transmit power that causes a received quality to largely fall below a desired quality due to a rapid variation in channel condition and the like, and then at a middle portion of the frame and thereafter, the transmission is performed with the transmit power such that the received quality satisfies the desired quality, the communication is performed with the received quality satisfying the desired quality on slots at the middle portion of the frame and thereafter, however, the received quality has deteriorated largely at the beginning portion of the frame. Therefore, there is a problem that in light of the received quality of the whole frame, the transmission is not performed with the sufficient received quality that satisfy the desired quality. An error rate at the time of decoding received data is increased if the transmission is not performed with the sufficient received quality over the whole frame.

Further, as illustrated in FIG.2B, when the transmission is performed with the transmit power that causes the received quality to largely exceed the desired quality due to a rapid variation in channel condition and the like, the transmission is performed with a sufficient received quality satisfying the desired quality in light of the received quality of the whole frame, however, there is a problem that an interval is present in which the transmission is performed with the transmit power that is needlessly large. Performing the transmission with the transmit power that is needlessly large increases amounts of interference in other users, and increases power consumption in the transmitting station.

In addition, while the case is described herein that the transmit power causes a received quality to be extremely apart from a desired quality at a beginning portion of a frame, as an example, however, the same problem as described above arises in the case where the transmit power causes the received quality to be extremely apart from the desired quality at a middle portion of the frame.

Disclosure of Invention

It is an object of the present invention to provide a transmit power control method and transmission/reception apparatus capable of holding a received quality of the whole frame at a desired quality even when an interval occurs in which the transmission is performed with the transmit power that causes a received quality to be largely apart from a desired quality.

In order to achieve the above object, in the present invention, when an interval occurs in which a received quality deteriorates, an interval is provided in which the transmission is performed intentionally with an excess received quality to compensate for the deteriorated received quality, while when an interval occurs in which a received quality is excess, an interval is provided in which the transmission is performed intentionally with a deteriorated received quality to cancel the excess received quality, thereby holding the received quality of the whole frame at the desired quality.

Brief Description of Drawings

FIG.1 is a block diagram illustrating a partial schematic configuration of a conventional transmission/reception apparatus;

FIG.2A is a graph showing a variation in SIR to explain a following condition of a conventional transmit power control;

FIG.2B is another graph showing a variation in SIR to explain the following condition of the conventional transmit power control;

FIG.3 is a block diagram illustrating a partial schematic configuration of a transmission/reception apparatus according to a first embodiment of the present invention;

FIG.4 is a block diagram illustrating a partial schematic configuration of a received quality detection section in the transmission/reception apparatus according to the first embodiment of the present invention;

FIG.5A is a frame schematic view to explain how to determine N slots in the first embodiment of the present invention;

FIG.5B is another frame schematic view to explain how to determine N slots in the first embodiment of the present invention;

FIG.6A is a graph showing a variation in SIR to explain a following condition of a transmit power control in the first embodiment of the present invention;

FIG.6B is another graph showing a variation in SIR to explain a following condition of the transmit power control in the first embodiment of the present invention;

FIG.7 is a block diagram illustrating a partial schematic configuration of a transmission/reception apparatus according to a second embodiment of the present invention;

FIG.8 is a block diagram illustrating a partial schematic configuration of a received quality detection section in the transmission/reception apparatus according to the second embodiment of the present invention;

FIG.9A is a graph showing a variation in SIR to explain a following condition of a transmit power control in the second embodiment of the present invention;

FIG.9B is another graph showing a variation in SIR to explain a following condition of the transmit power control in the second embodiment of the present invention;

FIG.10 is a block diagram illustrating a partial schematic configuration of a transmission/reception apparatus according to a third embodiment of the present invention;

FIG.11 is a graph showing a variation in SIR to explain a following condition of a transmit power control in the third embodiment of the present invention;

FIG.12 is a block diagram illustrating a partial schematic configuration of a transmission/reception apparatus according to a fourth embodiment of the present invention;

FIG.13 is a graph showing a variation in SIR to explain a following condition of a transmit power control in the fourth embodiment of the present invention;

FIG.14 is a block diagram illustrating a partial schematic configuration of a transmission/reception apparatus according to a fifth embodiment of the present invention; and

FIG.15 is a schematic view showing an example of a frame format to explain chip interleaving in the fifth embodiment of the present invention.

Best Mode for Carrying Out the Invention

Embodiments of the present invention will be explained below specifically with reference to accompanying drawings.

(First embodiment)

A transmit power control method and transmission/reception apparatus according to this embodiment perform a transmit power control according to an average value of received equalities of a plurality of slots.

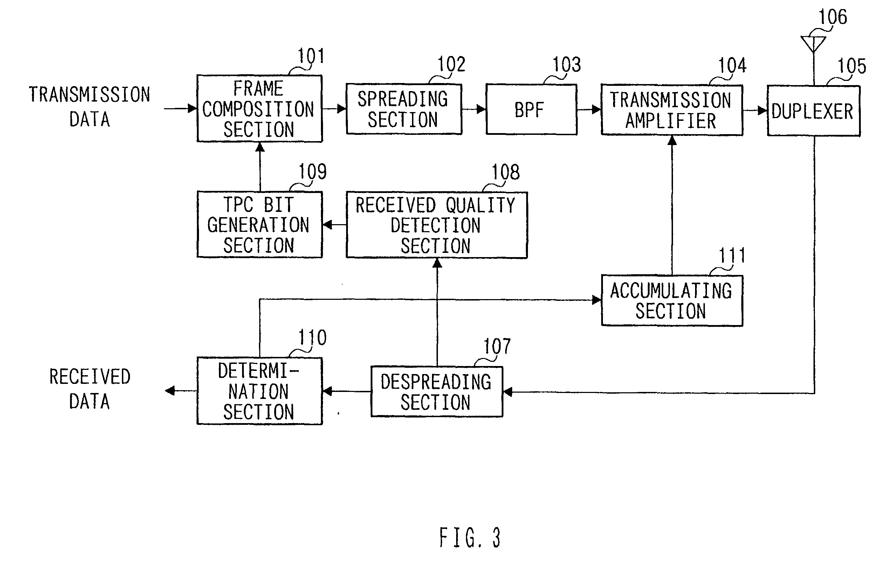

The transmit power control method and transmission/reception apparatus according to the first embodiment of the present invention will be explained below using FIGs.3 to 6. FIG.3 is a block diagram illustrating a partial schematic configuration of the transmission/reception apparatus according to the first embodiment of the present invention.

Frame composition section 101 multiplexes transmission data and TPC bit. Spreading section 102 spreads and modulates the multiplexed data, and BPF 103 cancels unnecessary signals. Transmission amplifier 104 amplifies a transmission signal. The amplified transmission signal is transmitted from antenna 106 through duplexer 105.

Antenna 106 also receives signals, and despreading section 107 demodulates the received signals. At this point, received quality detection section 108 calculates a received quality from SIR of the received signal demodulated in despreading section 107. TPC bit generation section 109 generates a TPC bit based on the received quality to provide to frame composition section 101.

Determination section 110 obtains received data from the demodulated received signal. Further, determination section 110 extracts the TPC bit transmitted from a partner station from the demodulated received data, and determines whether the TPC bit is 0 or 1. Accumulating section 111 receives the determined result from determination section 110, and corresponding to the result, instructs transmission amplifier 104 to increase or decrease the transmit power. For example, it is predetermined that a current amplification amount is decreased by 1dB when the determined result is indicative of 0, while the current amplification amount is increased by 1dB when the determined result is indicative of 1.

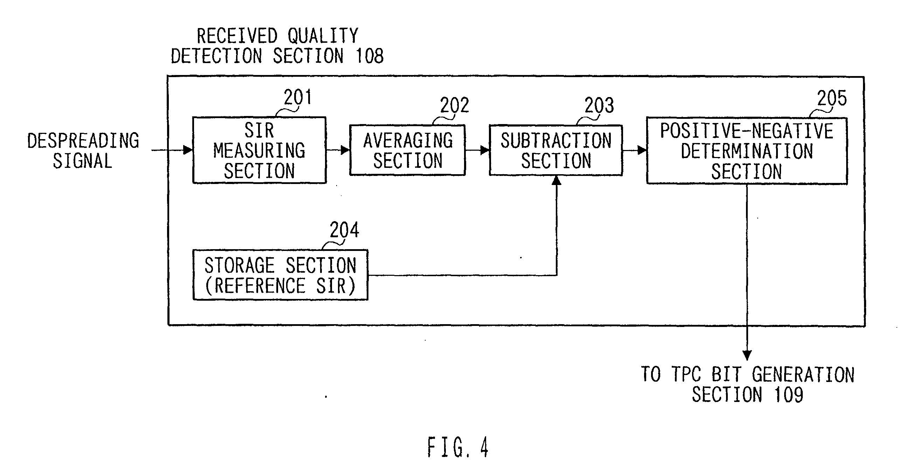

A configuration of received quality detection section 108 will be described next in detail using FIG.4. FIG. 4 is a block diagram illustrating a partial schematic configuration of the received quality detection section in the transmission/reception apparatus according to the first embodiment of the present invention.

First, SIR measuring section 201 measures SIR of a despread signal input to received quality detection section 108. Then, averaging section 202 calculates an average value (hereinafter referred to as "average SIR") of SIR measurements (hereinafter referred to as "measured SIR") by the following equation (1).

$$\frac{\sum_{1}^{N} SIR_M(i)}{N} \quad \cdots \quad (1)$$

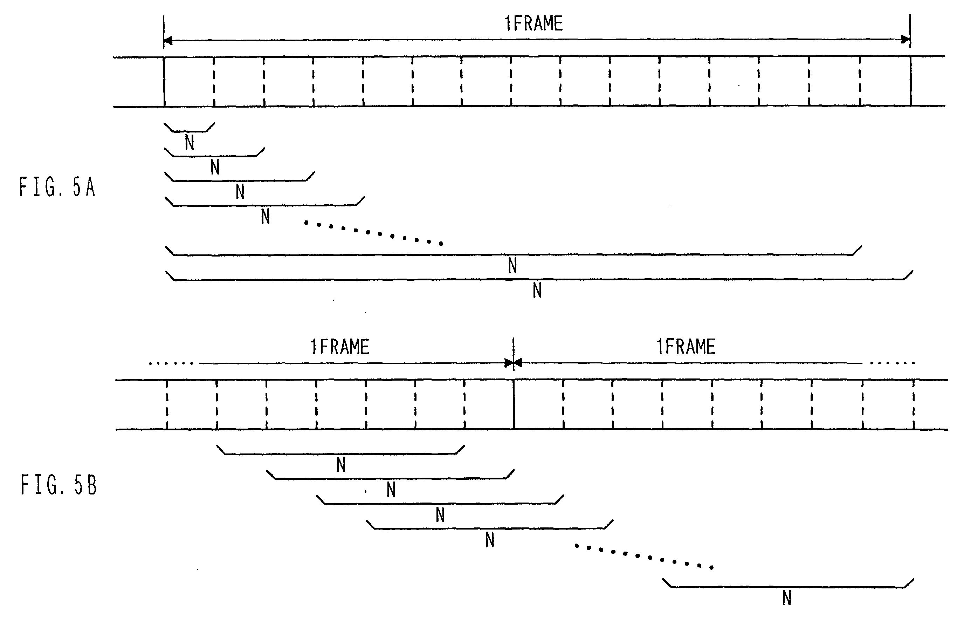

In the above equation (1), $SIR_M(i)$ is the measured SIR of an ith slot, and therefore the average SIR of predetermined N slots is calculated by the above equation (1). While the N slots are determined arbitrarily herein, those may be determined as shown in FIG.5A or FIG. 5B as an example. FIGs. 5A and 5B are frame schematic views to explain how to determine N slots in the first embodiment of the present invention.

The example shown in FIG.5A determines N received slots from a beginning of a frame as the N slots in the above equation (1) at the time of receiving the Nth slot from the beginning of the frame. By thus determining, SIR of the Nth slot is calculated as an average value of the measured SIR of slots from the head slot to the Nth slot in the frame. Further, in this case, averaging section 202 resets accumulated $SIR_M(i)$ every time at a beginning of a frame. Such a determination way is effective, in particular, when a variation in received equality is relatively large, for example, at the time of starting or restarting a communication.

Meanwhile, the example shown in FIG.5B determines arbitrary N slots as the N slots in the above equation (1). By thus determining, SIR of the ith slot is calculated as an average value of the measured SIR of last predetermined N slots. Such a determination way is effective, in particular, when communications are performed successively and a variation in received equality is relatively moderate.

Then, subtraction section 203 subtracts SIR used as a reference (hereinafter referred to as "reference SIR" ) stored in storage section 204 from the average SIR, and outputs the subtracted result to positive-negative determination section 205. Positive-negative determination section 205 determines whether the subtracted result is positive or negative, and provides the determined result to TPC bit generation section 109. TPC bit generation section 109 is thereby capable of judging whether to transmit "0" or "1", i.e., whether to transmit an instruction for increasing the transmit power or another instruction for decreasing the transmit power to generate a TPC bit.

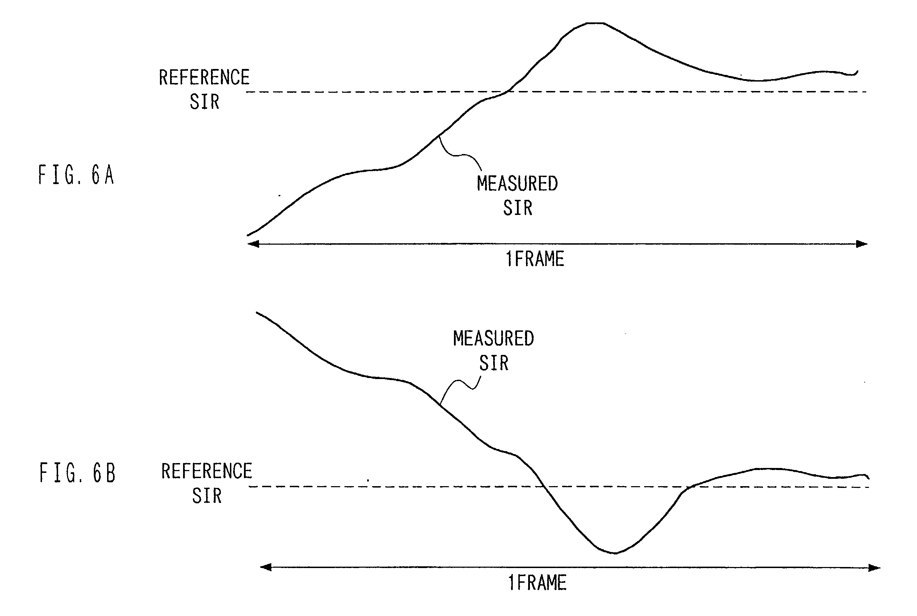

A following condition of the transmit power control in this embodiment will be explained next using FIGS.6A and 6B. FIGs.6A and FIG.6B are graphs showing a variation in SIR to explain the following condition of the transmit power control in the first embodiment of the present invention.

In the conventional transmit power control method, the transmit power control is performed so as to hold a received quality per slot basis at a desired quality, and therefore at a middle portion of a frame and thereafter, a variation in received quality is as shown in FIG.2A or FIG.2B.

Meanwhile, as shown in FIG.6A, when the transmission is performed with the transmit power that causes a received quality to largely fall below a desired quality at a beginning portion of a frame, in the transmit power control method of this embodiment, the measured SIR reaches the reference SIR at the time the received quality reaches the desired quality at a middle portion of the frame. However, in the transmit power control method of this embodiment, the average SIR does not reach the reference SIR yet at the middle portion of the frame, and therefore the transmit power control is performed to still increase the transmit power after the received quality has reached the desired quality.

Accordingly, in the transmit power control method of this embodiment, when the transmission is performed with the transmit power that causes a received quality to largely fall below a desired quality at a beginning portion of a frame, an interval arises in which the transmission is performed with an excess received quality at a middle portion of the frame and thereafter. Accordingly, from the whole frame of view, the deteriorated received quality is compensated with the excess received quality.

Further, as shown in FIG.6B, when the transmission is performed with the transmit power that causes a received quality to largely exceed a desired quality at a beginning portion of a frame, in the transmit power control method of this embodiment, the measured SIR falls below the reference SIR at the time the received quality falls below the desired quality at a middle portion of the frame. However, in the transmit power control method of this embodiment, the average SIR still exceeds the reference SIR at the middle portion of the frame, and therefore the transmit power control is performed to still decrease the transmit power after the received quality has fallen below the desired quality.

Accordingly, in the transmit power control method of this embodiment, when the transmission is performed with the transmit power that causes a received quality to largely exceed a desired quality at a beginning portion of a frame, an interval arises in which the transmission is performed with a deteriorated received quality at a middle portion of the frame and thereafter. Accordingly, from the whole frame of view, the excess received quality is canceled by the deteriorated received quality.

In addition in this embodiment, averaging section 202 calculates a simple average of the measured SIR with the equation (1) described previously. However, the simple average may cause a case that control for increasing the transmit power is further performed after the average SIR has reached the reference SIR, or another case that control for decreasing the transmit power is further performed after the average SIR has fallen below the reference SIR. As a result, a case may occur that the average SIR varies around the reference SIR and the transmit power control becomes unstable. In order to prevent this, it may be possible to calculate a weighted average using either of the following equations (2) to (4) as the average value of the measured SIR.

$$\frac{\displaystyle\sum_i^N SIR_M(i)}{N} + SIR_M(N) \over 2 \qquad \cdots \ (2)$$

In receiving an Nth slot, the above equation (2) calculates an average value of the simple average calculated by the above equation (1) and the measured SIR of the Nth slot.

$$\frac{\displaystyle\sum_i^N SIR_M(i) + SIR_M(N)}{N+1} \qquad \cdots \ (3)$$

The above equation (3) adds accumulated measured SIR corresponding to N slots to the measured SIR of the Nth slot to calculate the average value.

By the above equations (2) and (3), a weight of the latest measured SIR is increased, thereby the transmit power control with the predictability added can be performed, and therefore it is possible to prevent the transmit power control from being unstable.

$$\frac{\displaystyle\sum_i^N \lambda^{N-i}\ SIR_M(i)}{\displaystyle\sum_i^N \lambda^{N-i}} \qquad (0<\lambda\leq1) \quad \cdots \ (4)$$

The above equation (4) performs weighting on the measured SIR while increasing a weight as coming close to the Nth slot, to calculate an average value. By the above equation (4), a weight is increased whenever the measured SIR is obtained newly, thereby the transmit power control with the predictability added can be performed, and therefore it is possible to prevent the transmit power control from being unstable.

Thus, according to the transmit power control method and transmission/reception apparatus according to this embodiment, the transmit power control is performed according to an average value of received qualities of a plurality of slots. Therefore, when an interval occurs in which the received quality deteriorates, an interval arises in which the transmission is performed with an excess received quality after the received quality has reached the desired quality and thereby the deteriorated received quality is compensated, while when an interval occurs in which the received quality is excess, an interval arises in which the transmission is performed with a deteriorated received quality after the received quality has fallen below the desired quality and thereby the excess received quality is canceled. As a result, according to the transmit power control method and transmission/reception apparatus according to this embodiment, it is possible to hold the received quality of the whole frame at the desired quality.

Further, according to the transmit power control method and transmission/reception apparatus according to this embodiment, when the internal occurs in which the received equality deteriorates, the received quality is compensated, and it is thereby possible to decrease an error rate at the time of decoding received data. In addition, when the data is subjected to symbol interleaving processing, the error rate is further decreased.

Furthermore, according to the transmit power control method and transmission/reception apparatus according to this embodiment, when the interval occurs in which the received quality is excess, the transmit power control for decreasing the transmit power is performed still after the received quality has fallen below the desired quality, and therefore it is possible to reduce interference amounts in other users and to suppress power consumption in the transmitting station, as compared to the conventional transmit power control method.

(Second embodiment)

A transmission/reception apparatus according to this embodiment is different from that in the first embodiment in a point that the amplitude of a TPC bit is made variable to be a parameter as well as the bit value and thereby the transmit power is increased or decreased by an arbitrary increase or decrease amount instead of a constant amount.

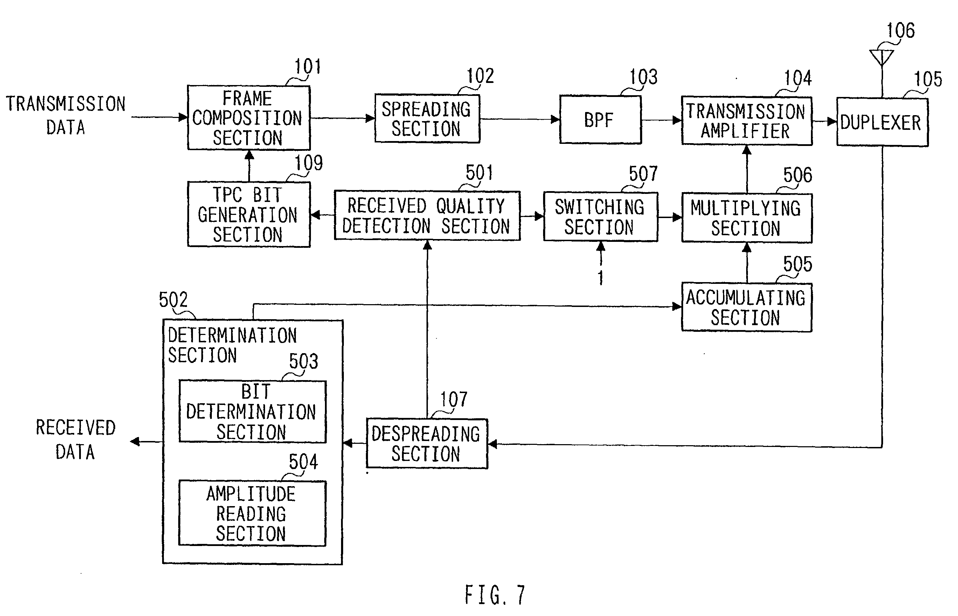

The transmit power control method and transmission/reception apparatus according to the second embodiment of the present invention will be explained below using FIGs.7 to 9. FIG.7 is a block diagram illustrating a partial schematic configuration of the transmission/reception apparatus according to the second embodiment of the present invention. In addition, the same sections as in the first embodiment are assigned the same reference numerals as in the first embodiment and the detailed explanations are omitted.

When despreading section 107 demodulates a received signal, received quality detection section 501 detects a received quality from SIR of the received quality demodulated in despreading section 107. A configuration of received quality detection section 501 will be described below. TPC bit generation section 109 generates a TPC bit based on the received quality to provide to frame composition section 101.

Determination section 502 is comprised of bit determination section 503 and amplitude reading section 504. Determination section 502 obtains received data from the demodulated received signal to output. Bit determination section 503 extracts the TPC bit from the received signal, and determines whether the TPC bit is 0 or 1. Amplitude reading section 504 reads a ratio between the amplitude of a signal except the TPC bit and the amplitude of the TPC bit in the received signal.

Accumulating section 505 obtains the bit value of the TPC bit and the amplitude value ratio in the received signal. The bit value indicates an instruction for increasing transmit power or for decreasing transmit power, and the amplitude value ratio indicates an increase or decrease amount in the transmit power. Accumulating section 505 combines these two conditions, and thereby is capable of obtaining an amplitude control value for instructing transmission amplifier 104 to increase or decrease the transmit power by an arbitrary amount.

Further when the amplitude of a received TPC bit is 0, the amplitude control value that is an output of accumulating section 505 is ±0. Thereby, the increase or decrease instruction indicated by the TPC bit value loses its meaning substantially, and an instruction for keeping a current value is output to transmission amplifier 104.

Multiplying section 506 functions to control transmission amplifier 104 so that the TPC bit in a transmission signal is transmitted with the amplitude made variable based on the received quality instead of the amplitude based on the amplitude control value calculated in accumulating section 505. That is, only at the time of the transmit power control on TPC bits, multiplying section 506 multiplies the amplitude control value by a correction value calculated from the received quality detected in received quality detection section 501, and it is thereby possible to perform the transmit power control with the received quality added.

The correction value is proportional to a difference between the average SIR and the reference SIR. In other words, the correction value is increased as the difference between the average SIR and the reference SIR is increased, while being brought into 1 as the difference is decreased. It is thereby possible to provide the TPC bit in a transmission signal with the amplitude proportional to a transmit power increase or decrease amount to request to a communication partner. A method for calculating the correction value will be described later.

Switching section 507 functions to switch the predetermined value of "1" and a value indicative of a received quality output from received quality detection section 501 as appropriate to output either value to multiplying section 506. By the operation of switching section 507, it is possible to always keep the correction value at 1 at the time of the transmit power control on bits except the TPC bits, and to output the correction value output from received quality detection section 501 to multiplying section 506 only at the time of the transmit power control on the TPC bits.

It is thus possible to vary the amplitude only of a TPC bit in a slot of transmission signal with the constant amplitude, thereby enabling a determination section of a communication partner to read the bit value and amplitude of the TPC bit. In addition, the number of errors is increased when the amplitude of the TPC bit is small, however, the small value means that the transmit power control amount is small, and therefore the adverse effect is small.

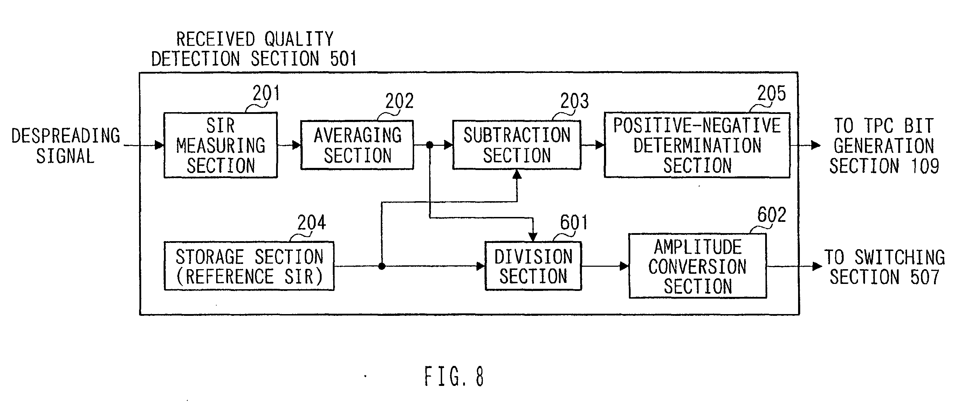

A configuration of received quality detection section 501 will be described next in detail using FIG.8. FIG. 8 is a block diagram illustrating a partial schematic configuration of the received quality detection section in the transmission/reception apparatus according to the second embodiment of the present invention. In addition, the same sections as in the first embodiment are assigned the same reference numerals as in the first embodiment and the detailed explanations are omitted.

In received quality detection section 501, division section 601 calculates a ratio between the average SIR and the reference SIR to output to amplitude conversion section 602. Amplitude conversion section 602 converts the input subtracted result into an increasing function in which one input corresponds to one output, and provides the converted output to multiplying section 506 via switching section 507 as the amplitude control correction value.

As the conversion method performed by amplitude conversion section 602, for example, a method described below is considered as an example.

Assuming that an input to amplitude conversion section 602 is X and an output from the section 602 is Y, Y is defined as follows:

$$Y = SQRT\{ABS(10*LOG_{10}X)\},$$

where SQRT(Z) represents a square root of Z, and ABS(Z) represents an absolute value of Z.

Y output to multiplying section 506 functions to correct the amplitude control value output from accumulating section 505 in accordance with the received quality only at the time of the transmit power control on TPC bits. Further, by using the logarithm and square root to obtain Y as defined in the above equation, it is possible to suppress a variation in amplitude to a small value as compared to correction that is directly proportional to an error. In other words, it is possible to prevent the correction value Y from being increased more than a necessary value when the error X is large. Accordingly it is possible to reduce a load on transmission amplifier 104.

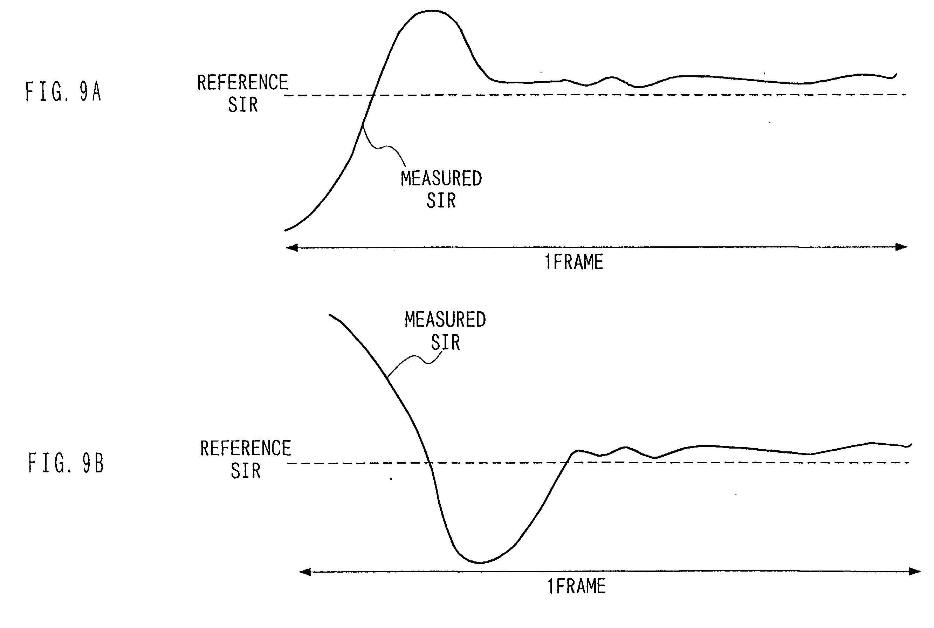

A following condition of the transmit-power control in this embodiment will be explained next using FIG.9. FIG.9 is a graph showing a variation in SIR to explain the following condition of the transmit power control in the second embodiment of the present invention.

The transmit power control method of this embodiment enables a request on increase or decrease amount to be transmitted to a communication partner by the TPC bit of 1 bit as well as a request for increasing or decreasing the transmit power. Accordingly, when the transmission is performed with the transmit power that causes a received quality to largely fall below a desired quality at a beginning portion of a frame, in the transmit power control method of this embodiment, as illustrated in FIG.9A, the received quality reaches the desired quality faster, then an interval becomes shorter in which the transmission is performed with an excess received quality, and therefore the deteriorated received quality is compensated faster, than in the first embodiment .

Further, when the transmission is performed with the transmit power that causes a received quality to largely exceed a desired quality at a beginning portion of a frame, in the transmit power control method of this embodiment, as shown in FIG.9B, the received quality falls to the desired quality faster, then an interval becomes shorter in which the transmission is performed with a deteriorated received quality, and therefore the excess received quality is canceled faster, than in the first embodiment.

Thus, according to the transmit power control method and transmission/reception apparatus according to this embodiment, the amplitude of a TPC bit is made variable to be a parameter as well as the bit value, and thereby the transmit power is increased or decreased by an arbitrary increase or decrease amount instead of a constant amount. Therefore, as compared to the first embodiment, it is possible to compensate for the deteriorated received quality faster and to cancel the excess received quality faster. As a result, according to the transmit power control method and transmission/reception apparatus according to this embodiment, it is possible to hold the received quality of the whole frame at a desired quality in a shorter time than in the first embodiment.

(Third embodiment)

This embodiment explains a case that the transmit power control method for performing the transmit power control according to an average value of received qualities of a plurality of slots is applied to communications performed by a compressed mode system. The compressed mode herein is a mode to compress a transmission time by decreasing a spreading factor of data having been transmitted successively, and instead of it, by increasing power of a portion with the decreased spreading factor. A system performing communications using such a mode is called the compressed mode system. The compressed mode is sometimes called a slotted mode.

Since the transmit power control is not performed properly during the compressed mode, there is a case that the received quality is extremely apart from the desired quality when the compressed mode is canceled. Therefore, in this embodiment, the transmit power control method for performing the transmit power control according to an average value of received qualities of a plurality of slots is applied to communications performed by the compressed mode system.

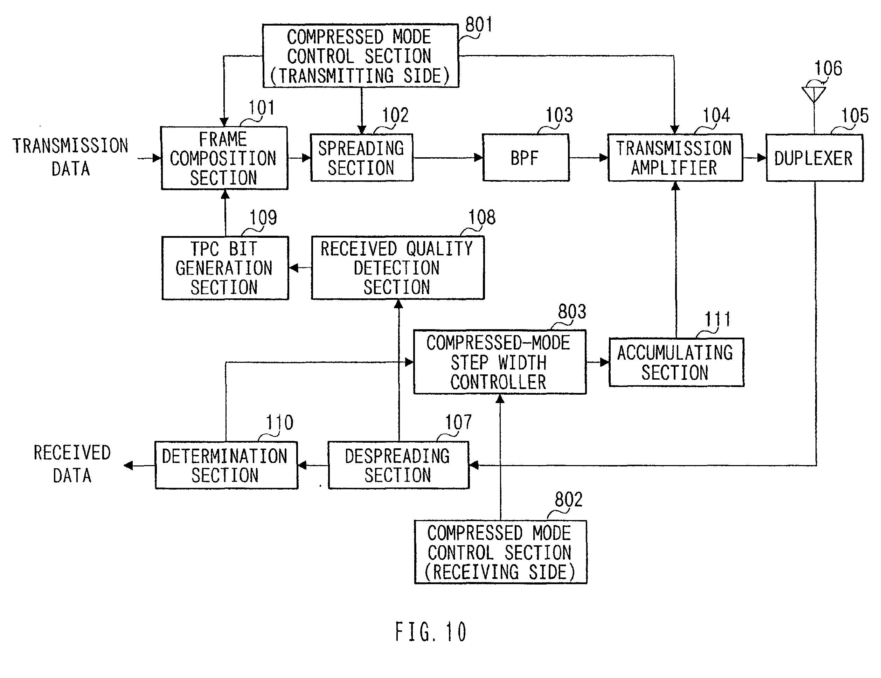

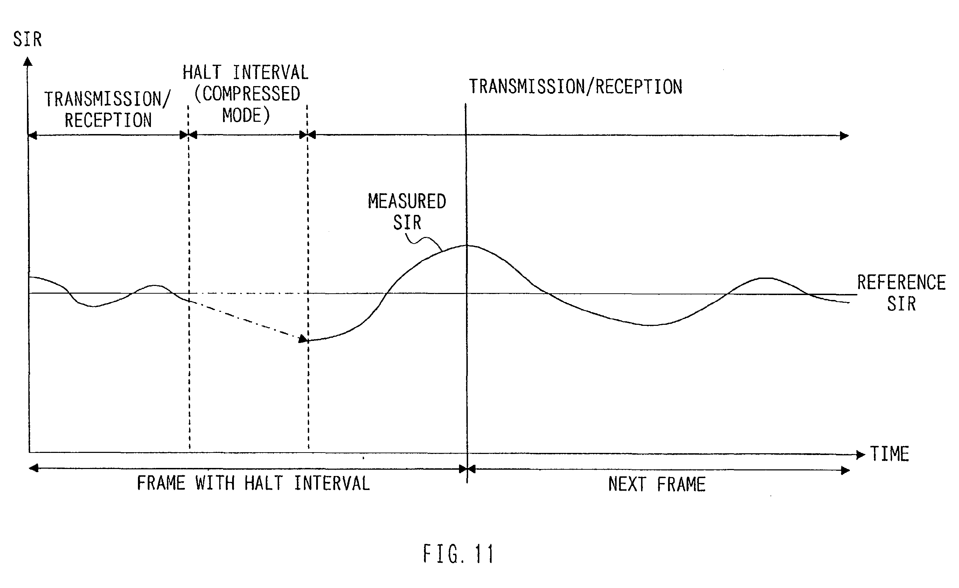

The transmit power control method and transmission/reception apparatus according to the third embodiment of the present invention will be explained below using FIGs.10 and 11. FIG.10 is a block diagram illustrating a partial schematic configuration of the transmission/reception apparatus according to the third embodiment of the present invention. In addition, the same sections as in the first embodiment are assigned the same reference numerals as in the first embodiment and the detailed explanations are omitted.

First, on a transmitting side, when compressed mode control section (transmitting side) 801 determines that the transmission is performed using the compressed mode, the section 801 outputs an instruction for performing the transmission using the compressed mode to frame composition section 101, spreading section 102 and transmission amplifier 104.

According to the instruction, frame composition section 101 performs a frame format for slots to be compressed (hereinafter referred to as "compressed slot" ) , and spreading section 102 spreads the compressed slot with a spreading code of a spreading factor less than that of a general slot. Further, transmission amplifier 104 does not perform the transmission during the compressed mode.

On a receiving side, since TPC bits are not received during the compressed mode, compressed mode control section (receiving side) 802 notifies compressed-mode step width controller 803 that the compressed mode is recognized, and thereby a particular transmit power control is performed during the compressed mode. As the particular transmit power control, there are considered, for example, (1) control for outputting TPC bits of "0" during the compressed mode so as not to change a value used before the compressed mode, (2) control for providing a change predicted from the previous variation, (3) control for decreasing the transmit power gradually and so on. There are no limitations in the particular transmit power control during the compressed mode.

In addition, when the compressed mode is canceled, compressed mode control section (receiving side) 802 controls compressed-mode step width controller 803 so that the transmit power control is performed based on bit values of TPC bits.

A following condition of the transmit power control in this embodiment will be explained next using FIG.11. FIG.11 is a graph showing a variation in SIR to explain the following condition of the transmit power control in the third embodiment of the present invention.

Since the transmit power control is not performed properly during the compressed mode, as illustrated in FIG.11, the case sometimes occurs that the received quality is extremely apart from the desired quality at the time the compressed mode is canceled. However, according to this embodiment, even when the received equality largely falls below the desired equality at the time the compressed mode is canceled, as illustrated in FIG.11, an interval arises in which the transmission is performed with an excess received quality after the received quality has reached the desired quality, and thereby the deteriorated received quality is compensated.

Further, in this case, on next frame after the frame having a halt interval, as illustrated in FIG.11, it may occur that the received quality largely exceeds the desired equality at a beginning portion of the frame. However, in this case, an interval arises in which the transmission is performed with the deteriorated received quality after the received quality has fallen below the desired quality, and thereby the excess received quality is canceled.

Thus, according to the transmit power control method and transmission/reception apparatus according to this embodiment, when communications are performed by the compressed mode system, the transmit power control is performed according to the average value of received qualities of a plurality of slots. Therefore it is possible to compensate for the received quality deteriorated by the compressed mode, and to cancel the excess received quality. As a result, according to the transmit power control method and transmission/reception apparatus according to this embodiment, even when communications are performed by the compressed mode system, it is possible to hold the received quality of the whole frame at the desired quality.

(Fourth embodiment)

A transmission/reception apparatus according to this embodiment has the same configuration as in the second embodiment, and the transmission/reception apparatus according to the second embodiment is applied to communications performed by the compressed mode system.

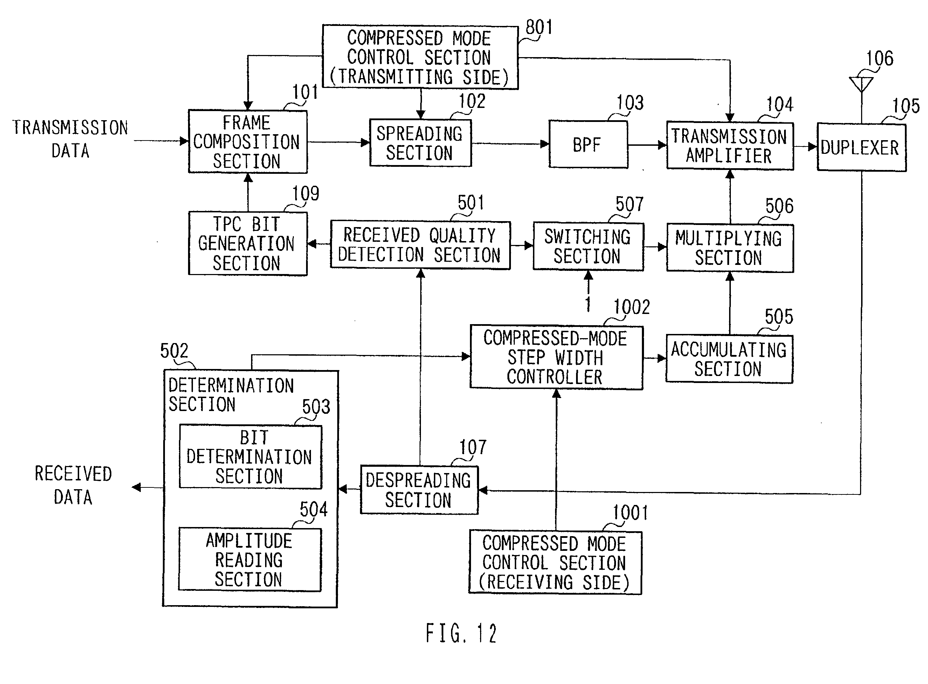

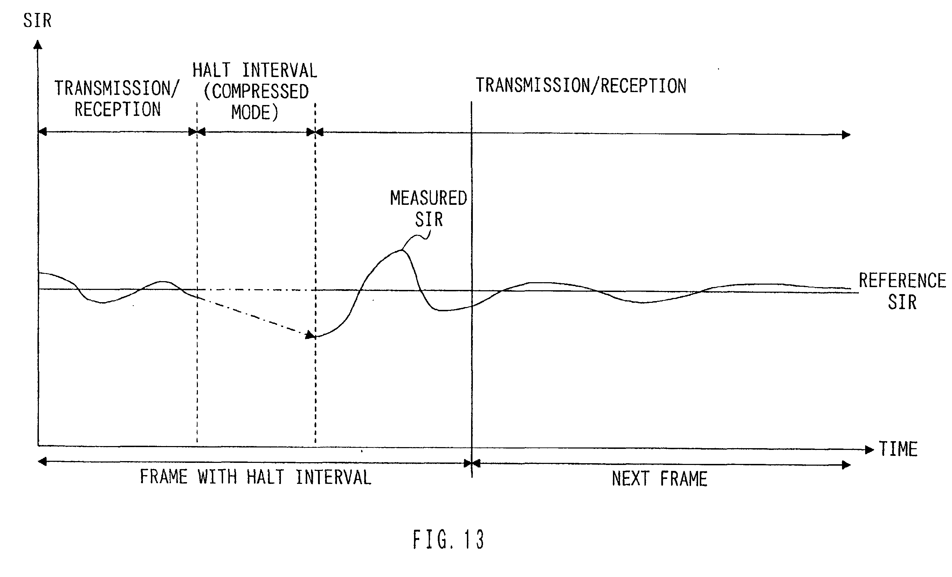

The transmit power control method and transmission/reception apparatus according to the fourth embodiment of the present invention will be explained below using FIGs.12 and 13.

FIG.12 is a block diagram illustrating a partial schematic configuration of the transmission/reception apparatus according to the fourth embodiment of the present invention. In addition, since the transmission/ reception apparatus according to this embodiment is achieved by combining the configuration of the second embodiment and the configuration of the third embodiment, the same sections as in the second and third embodiments are assigned the same reference numerals as in the second and third embodiments and the detailed explanations are omitted.

In the transmission/reception apparatus according to this embodiment, when the compressed mode is canceled, compressed mode control section (receiving side) 1001 controls compressed-mode step width controller 1002 so that the transmit power control is performed based on bit values and amplitude of TPC bits.

A following condition of the transmit power control in this embodiment will be explained next using FIG.13. FIG.13 is a graph showing a variation in SIR to explain the following condition of the transmit power control in the fourth embodiment of the present invention.

The transmit power control method of this embodiment enables a request on increase or decrease amount to be transmitted to a communication partner by the TPC bit of 1 bit as well as a request for increasing or decreasing the transmit power at the time the compressed mode is canceled.

Accordingly, in the transmit power control method of this embodiment, when the received quality is extremely apart from the desired quality at the time the compressed mode is canceled, as illustrated in FIG. 13, the received quality reaches the desired quality faster, then an interval becomes shorter in which the transmission is performed with an excess received quality, and therefore the received quality deteriorated by the compressed mode is compensated faster, than in the third embodiment.

Thus, according to the transmit power control method and transmission/reception apparatus according to this embodiment, at the time the compressed mode is canceled, the amplitude of a TPC bit is made variable to be a parameter as well as the bit value, and thereby the transmit power is increased or decreased by an arbitrary increase or decrease amount instead of a constant amount. Therefore, when communications are performed by the compressed mode system, as compared to the third embodiment, it is possible to compensate for the deteriorated received quality faster and to cancel the excess received quality faster. As a result, according to the transmit power control method and transmission/reception apparatus according to this embodiment, when communications are performed by the compressed mode system, it is possible to hold the received quality of the whole frame at a desired quality in a shorter time than in the third embodiment.

(Fifth embodiment)

A transmission/reception apparatus according to this embodiment is different from that in the first embodiment in a point chip interleaving is performed.

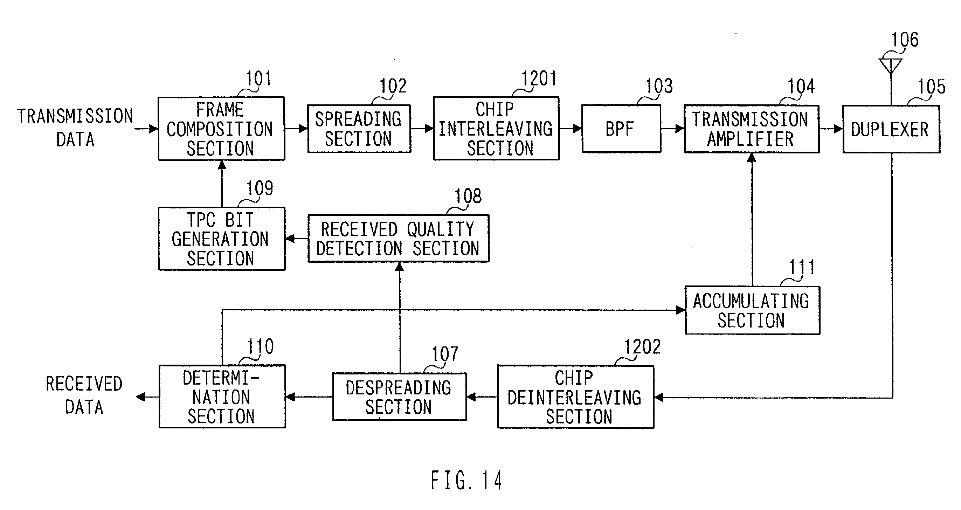

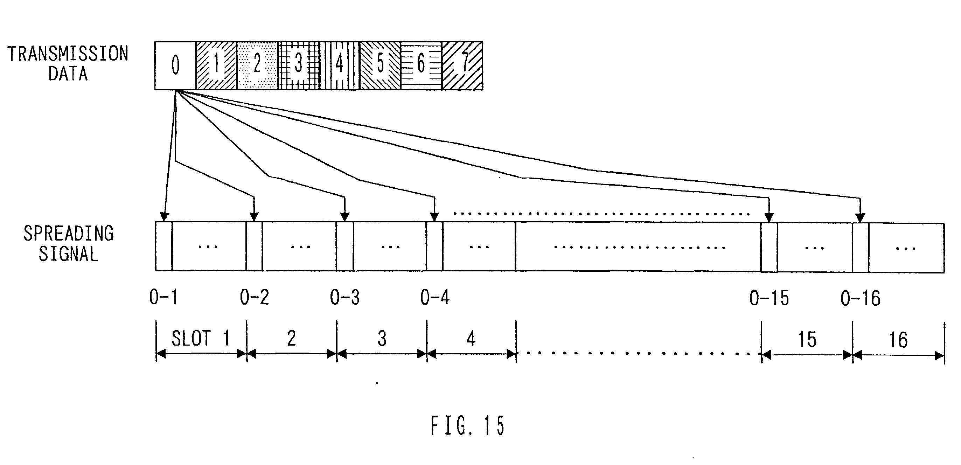

The transmit power control method and transmission/reception apparatus according to the fifth embodiment of the present invention will be explained below using FIGs.14 and 15. FIG.14 is a block diagram illustrating a partial schematic configuration of the transmission/reception apparatus according to the fifth embodiment of the present invention, and FIG.15 is a schematic view showing an example of a frame format to explain the chip interleaving in the fifth embodiment of the present invention. In addition, the same sections as in the first embodiment are assigned the same reference numerals as in the first embodiment and the detailed explanations are omitted.

In FIG.14, chip interleaving section 1201 performs the interleaving on each chip of a spread transmission signal. Chip deinterleaving section 1202 performs on a received signal the rearrangement opposite to the chip interleaving of the transmitting side.

The frame format when the chip interleaving is performed will be explained next using FIG.15. FIG.15 shows an example of a case that 1 slot has 8 symbols and the spreading factor is 16.

In FIG. 15, symbol 0 is spread to be 16 chips. At this point, 16 chips are not arranged at successive positions, but are arranged in every 8 chips one by one. The chips of one symbol are thereby allocated to a plurality of slots, and therefore are supposed to be divided into slots of good signal quality and other slots of poor signal quality. It is thereby possible to hold the received quality for each symbol in the frame at constant.

Further, in that case in this embodiment, since the transmit power control is performed according to the average value of received qualities of a plurality of slots, the received quality of the whole frame is held at the desired quality. Accordingly, this embodiment enables the error rate at the time of decoding received data to be decreased further than in the first embodiment.

Thus, according to the transmit power control method and transmission/reception apparatus according to this embodiment, since the received quality of the whole frame is held at the desired quality, and further the received quality of each symbol is leveled by performing the chip interleaving, the error rate at the time of decoding received data can be further decreased.

In addition, the chip interleaving in this embodiment is capable of being carried out by being combined with any of the second to fourth embodiments described above. Further, in applying the chip interleaving to the present invention, a specific method of the chip interleaving and chip deinterleaving is arbitrary, and is not limited to numerals described herein.

As described above, according to the present invention, even when an interval occurs in which the transmission is performed with the transmit power that causes a received quality to be largely apart from a desired quality, it is possible to hold the received quality of the whole frame at the desired quality.

This application is based on the Japanese Patent Application No.HEI11-187610 filed on July 1, 1999, entire content of which is expressly incorporated by reference herein.

Industrial Applicability

The present invention is applicable to a base station apparatus used in a radio communication system, and to a communication terminal such as a mobile station apparatus performing radio communications with the base station apparatus.

**Claims**

1. A transmit power control method which controls transmit power so as to hold a quality per frame basis at a predetermined desired quality when an interval occurs in which a quality of a received signal per slot basis is extremely apart from the predetermined desired quality.

2. The transmit power control method according to claim 1, wherein the interval is an interval in which the quality per slot basis deteriorates to be below the predetermined desired quality, and when the interval occurs, the method increases the transmit power in order for the quality per slot basis to be excessive so as to cause another interval in which the quality per slot basis exceeds the predetermined desired quality, and thereby compensates for a deteriorated quality with an excessive quality.

3. The transmit power control method according to claim 1, wherein the interval is an interval in which the quality per slot basis is excessive to exceed the predetermined desired quality, and when the interval occurs, the method decreases the transmit power in order for the quality per slot basis to deteriorate so as to cause another interval in which the quality per slot basis falls below said the predetermined desired quality, and thereby cancels an excessive quality with a deteriorated quality.

4. A transmission/reception apparatus comprising:

    a measuring section that measures a quality of a received signal per slot basis;
    a calculator that calculates an average value of the quality per slot basis over a predetermined number of calculation slots; and
    a controller that compares the average value with a predetermined reference value, and based on a comparison result, controls transmit power.

5. The transmission/reception apparatus according to claim 4, wherein the controller varies a control amount in the transmit power to control the transmit power.

6. The transmission/reception apparatus according to claim 4, wherein when an interval occurs in which the average value falls below the predetermined reference value, the controller sets another interval in which the average value exceeds the predetermined reference value, and thereby compensates for quality deterioration in the interval in which the average value falls below the predetermined reference value.

7. The transmission/reception apparatus according to claim 4, wherein when an interval occurs in which the average value exceeds the predetermined reference value, the controller sets another interval in which the average value falls below the predetermined reference value, and thereby cancels quality excess in the interval in which the average value exceeds the predetermined reference.

8. The transmission/reception apparatus according to claim 4, wherein the calculator performs calculation using successive slots from a head slot of a frame of the received signal to a received slot as the predetermined number of calculation slots.

9. The transmission/reception apparatus according to claim 4, wherein the calculator performs calculation using a predetermined number of slots containing a received slot and neighboring slots to the received slot as the predetermined number of calculation slots.

10. The transmission/reception apparatus according to claim 4, wherein the calculator calculates a weighted average of the quality over a predetermined number of calculation slots.

11. Transmission/reception apparatus according to claim 4, further comprising:

    a recognizer that recognizes whether a mode is a compressed mode that decreases a spreading factor of a signal,
    wherein the controller performs transmit power control for the compressed mode at the time of the compressed mode.

12. Transmission/reception apparatus according to claim 4, further comprising:

    an interleaver that performs chip interleaving processing on spread transmission data; and
    a deinterleaver that performs chip deinterleaving processing on received data for each chip.

13. A communication terminal apparatus having a transmission/reception apparatus, the transmission/reception apparatus comprising:

    a measuring section that measures a quality of a received signal per slot basis;
    a calculator that calculates an average value of the quality per slot basis over a predetermined number of calculation slots; and
    a controller that compares the average value with a predetermined reference value, and based on a comparison result, controls transmit power.

14. A base station apparatus that performs radio communications with the communication terminal apparatus according to claim 13.

15. A base station apparatus having a transmission/reception apparatus, the transmission/reception apparatus comprising:

    a measuring section that measures a quality of a received signal per slot basis;
    a calculator that calculates an average value of the quality per slot basis over a predetermined number of calculation slots; and
    a controller that compares the average value with a predetermined reference value, and based on a comparison result, controls transmit power.

**16.** A communication terminal apparatus that performs radio communications with the base station apparatus according to claim 15.

EP 1 111 815 A1

TRANSMISSION
DATA → FRAME
COMPOSITION
SECTION (11) → SPREADING
SECTION (12) → BPF (13) → TRANSMISSION
AMPLIFIER (14) → DUPLEXER (15)

16

TPC BIT
GENERATION
SECTION (19) ← RECEIVED QUALITY
DETECTION
SECTION (18)

ACCUMULATING
SECTION (21)

RECEIVED
DATA ← DETERMI-
NATION
SECTION (20) ← DESPREADING
SECTION (17)

FIG. 1

FIG. 2A

REFERENCE
SIR

MEASURED
SIR

1FRAME

FIG. 2B

MEASURED
SIR

REFERENCE
SIR

1FRAME

EP 1 111 815 A1

EP 1 111 815 A1

TRANSMISSION
DATA →

**FRAME COMPOSITION SECTION** 101 → **SPREADING SECTION** 102 → **BPF** 103 → **TRANSMISSION AMPLIFIER** 104 → **DUPLEXER** 105

106

**TPC BIT GENERATION SECTION** 109 ← **RECEIVED QUALITY DETECTION SECTION** 108

**ACCUMULATING SECTION** 111

RECEIVED
DATA ←

**DETERMI-NATION SECTION** 110 ← **DESPREADING SECTION** 107

FIG. 3

RECEIVED QUALITY
DETECTION SECTION 108

DESPREADING
SIGNAL

201
SIR
MEASURING
SECTION

202
AVERAGING
SECTION

203
SUBTRACTION
SECTION

205
POSITIVE-NEGATIVE
DETERMINATION
SECTION

204
STORAGE SECTION
(REFERENCE SIR)

TO TPC BIT GENERATION
SECTION 109

FIG. 4

F I G. 5 A

F I G. 5 B

FIG. 6A

FIG. 6B

FIG. 7

TRANSMISSION DATA → FRAME COMPOSITION SECTION (101) → SPREADING SECTION (102) → BPF (103) → TRANSMISSION AMPLIFIER (104) → DUPLEXER (105) → 106

TPC BIT GENERATION SECTION (109) → FRAME COMPOSITION SECTION (101)

RECEIVED QUALITY DETECTION SECTION (501) → TPC BIT GENERATION SECTION (109)

RECEIVED QUALITY DETECTION SECTION (501) → SWITCHING SECTION (507) → MULTIPLYING SECTION (506) → TRANSMISSION AMPLIFIER (104)

ACCUMULATING SECTION (505) → MULTIPLYING SECTION (506)

SWITCHING SECTION (507) ← 1

DUPLEXER (105) → DESPREADING SECTION (107) → RECEIVED QUALITY DETECTION SECTION (501)

DESPREADING SECTION (107) → DETERMINATION SECTION (502)

DETERMINATION SECTION (502): BIT DETERMINATION SECTION (503), AMPLITUDE READING SECTION (504) → RECEIVED DATA

AMPLITUDE READING SECTION (504) → ACCUMULATING SECTION (505)

RECEIVED QUALITY
DETECTION SECTION 501

201

SIR
MEASURING
SECTION

DESPREADING
SIGNAL

202

AVERAGING
SECTION

203

SUBTRACTION
SECTION

205

POSITIVE-NEGATIVE
DETERMINATION
SECTION

TO TPC BIT
GENERATION
SECTION 109

204

STORAGE SECTION
(REFERENCE SIR)

601

DIVISION
SECTION

602

AMPLITUDE
CONVERSION
SECTION

TO SWITCHING
SECTION 507

FIG. 8

EP 1 111 815 A1

FIG. 9A

REFERENCE
SIR

MEASURED
SIR

1FRAME

FIG. 9B

MEASURED
SIR

REFERENCE
SIR

1FRAME

EP 1 111 815 A1

FIG. 10

EP 1 111 815 A1

FIG. 11

FIG. 12

FIG. 13

SIR

TRANSMISSION/
RECEPTION

HALT INTERVAL
(COMPRESSED
MODE)

TRANSMISSION/RECEPTION

MEASURED
SIR

REFERENCE
SIR

TIME

FRAME WITH HALT INTERVAL

NEXT FRAME

EP 1 111 815 A1

TRANSMISSION
DATA →

FRAME
COMPOSITION
SECTION
101

SPREADING
SECTION
102

CHIP
INTERLEAVING
SECTION
1201

BPF
103

TRANSMISSION
AMPLIFIER
104

DUPLEXER
105

106

TPC BIT
GENERATION
SECTION
109

RECEIVED QUALITY
DETECTION SECTION
108

ACCUMULATING
SECTION
111

DETERMI-
NATION
SECTION
110

DESPREADING
SECTION
107

CHIP
DEINTERLEAVING
SECTION
1202

← RECEIVED
DATA

FIG. 14

FIG. 15

TRANSMISSION DATA

SPREADING SIGNAL

## INTERNATIONAL SEARCH REPORT

| | International application No. |
|---|---|
| | PCT/JP00/04270 |

**A. CLASSIFICATION OF SUBJECT MATTER**
    Int.Cl⁷   H04B7/26

According to International Patent Classification (IPC) or to both national classification and IPC

**B. FIELDS SEARCHED**

Minimum documentation searched (classification system followed by classification symbols)
    Int.Cl⁷   H04B7/005, H04B7/26, H04J13/00, H04Q7/00

Documentation searched other than minimum documentation to the extent that such documents are included in the fields searched
    Jitsuyo Shinan Koho          1926-2000     Toroku Jitsuyo Shinan Koho  1994-2000
    Kokai Jitsuyo Shinan Koho   1971-2000

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 11-17646, A (NEC Corporation), 22 January, 1999 (22.01.99), Column 2, lines 26 to 42; Column 11, line 11 to Column 13, line 28 & EP, 886389, A | 4,5,11,13-16 |
| X | JP, 11-122212, A (Oki Electric Industry Co., Ltd.), 30 April, 1999 (30.04.99), Column 2, lines 3 to 13   (Family: none) | 1-10,13-16 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 September, 2000 (22.09.00) | 03 October, 2000 (03.10.00) |

| Name and mailing address of the ISA/ | Authorized officer |
|---|---|
| Japanese Patent Office | |
| Facsimile No. | Telephone No. |

Form PCT/ISA/210 (second sheet) (July 1992)